# EUROPEAN PATENT APPLICATION

(11) **EP 2 632 180 A1**
(43) Date of publication of application: **28.08.2013**
(21) Application number: 12305227.6
(22) Date of filing: 27.02.2012
(51) Int. Cl.: H04W 4/00, G06K 7/10

(54) **Method for exchanging data between two mobile devices**

(71) Applicant: Gemalto SA, 92190 Meudon (FR)
(72) Inventor: Hugot, Didier, 92190 Meudon (FR); Brun, Alain, 92190 Meudon (FR)

(57) **Abstract**

The invention relates to a method for exchanging data between a first mobile device (H1) and a second mobile device (H2) in a Peer-to-Peer mode, said first and second device being near field communication devices supporting only a Reader mode and a Card Emulation mode for exchanging data , said first device comprising a first application (APP1), a first secure element (SE1), said second device comprising a second application (APP2), a second secure element (SE2). The method comprises copying a first data (MSG1) to be exchanged in the first secure element (SE1), initiating a Peer-to-Peer session by the first application (APP1) of the first mobile device (H1); and if the first mobile device (H1) is in Reader mode, sending said first data (MSG1) from said first secure element (SE1) to the secure element (SE2) of the second mobile device (H2), sending said first data (MSG1) from the second secure element (SE2) to the second application (APP2) of the second mobile device (H2); otherwise, if the first mobile device (H1) is in a Card Emulation mode, sending a command by the second application (APP2) of the second mobile device (H2) to said first secure element (SE1) so as to get the first data (MSG1); receiving said first data (MSG1) to be exchanged by the second application (APP2) from said first application (APP 1).

## Description

### FIELD OF THE INVENTION

The present invention relates generally data exchange between two mobile phones applications and more specifically to a method for establishing a peer-to-peer communication using a Near Field Communiation (NFC) bearer.

### BACKGROUND OF THE INVENTION

As known, Near Field Communication (NFC) is a short range wireless connectivity technology standard which can be used between electronic devices. The NFC communication is for example enabled by bringing two compatible devices one to another.

NFC devices can exchange data according to three operating modes as defined on ISO/IEC 18092 NFC IP-1 and ISO/IEC 14443 contactless smart card standards. In a Reader mode, the NFC device is able to read NFC Forum mandates tag types, in a Card Emulation mode, the NFC device appears as a NFC tag itself to an external reader,and in a Peer-to-Peer mode, two devices are able to exchange data

In order to perform the peer-to-peer data exchanges on NFC devices, either the peer-to-peer protocol is supported, or a mix between "card emulation mode" and "reader mode" could be used.

Nevertheless, in all cases, the problem is that on NFC handsets with a SWP (single wire protocol) interface, the Card Emulation mode is managed by an Universal Subscriber Identity Module also called USIM and the Reader mode by a handset application. For such devices which do not implement the peer-to-peer standardized protocol, a contactless frontend (CLF) chip embedded in the handset is then switching consecutively between Reader and Card Emulation modes in order to detect a card or a tag or to be detected by another reader. Therefore, when placing the NFC mobile phone in front of another one, one will for example act as the reader and the second one as the card. This is random and it is then not possible to know in advance which NFC device will act as the reader and which NFC device will act as the card. The device which initiates the Peer-to-Peer transaction can then act as a reader, e.g.communication with the other device USIM or act as a card e.g. communication with the other device handset application.

There is then a need to find a method for performing a Peer-to-Peer data exchanges on SWP devices where the Card Emulation mode is managed by the USIM and the Reader mode is managed by handset applications.

It is then an object of the invention to provide a method for both handset applications and USIM cards to perform these Peer-to-Peer data exchanges.

Thereto, the present invention provides a method for exchanging data between a first mobile device and a second mobile device in a Peer-to-Peer mode, said first and second device being near field communication devices supporting only a Reader mode and a Card Emulation mode for exchanging data, said first device comprising a first application, a first secure element, said second device comprising a second application, a second secure element, **characterised in that** it comprises copying a first data to be exchanged in the first secure element, initiating a Peer-to-Peer session by the first application of the first mobile device; and if the first mobile device is in Reader mode, sending said first data from said first secure element to the secure element of the second mobile device, sending said first data from the second secure element to the second application of the second mobile device; otherwise, if the first mobile device is in a Card Emulation mode, sending a command by the second application of the second mobile device to said first secure element so as to get the first data; receiving said first data to be exchanged by the second application from said first application.

According to other aspects of the invention,the method may comprise sending second data to the first secure element, said first secure element then sending said second data to the first application, when the first mobile device is in a Card Emultaion mode, after receiving first data to be exchanged by the second application from said first application.
- the method may comprise if the first mobile device is a Reader mode, erasing first data to be exchanged from said first secure element before sending said first data to the second secure element.
- the method may comprise sending regular command from the first application of the first mobile device to the second second secure element.
- the method may comprise sending regular command from the second application of the second mobile device to the first secure element.
- the method may comprise copying second data to be sent by the second application of the second mobile device to the first application of the first mobile device as a response data in the second secure element.
- the method may comprise reading second data by the first application at a next command from the first application (APP1) of the first mobile device.
- the method may comprise copying a third data to be sent by the first application of the first mobile device to the second application of the second mobile device as a response data in the first secure element.
- the method may comprise reading said third data by the first application at a next command from the second application of the second mobile device
- the method may comprise a step wherein the two mobile devices are placed one in front of the other so as to initiate a NFC communication.

The present invention also comprises using a first mobile handset and a second mobile handset as mobile device, and a first Universal Subscriber Identity Module and a second Universal Subscriber Identity Module as secure element for exchanging data according to this method.

Thanks to the invention, it is advantageously possible to manage NFC data exchange between two handset applications on NFC SWP mobile phones without having any control on the reader and card emulation modes wheneither the mobile device which initiates the Peer-to-Peer transaction is in Reader mode or in Card emulation mode.

The invention provides advantageously a method for exchanging data bidirectionnaly between the two devices.

Thanks to the invention, this NFC Peer-to-Peer communication can address a large number of different use cases, such as, for example:
- NFC Peer-to-Peer money transfer: transfer money from a user to another one...
- NFC Data exchange: images, video, contacts, applications...

The various aspects, features and advantages of the invention will become more fully apparent to those having ordinary skill in the art upon careful consideration of the following Detailed Description, given by way of example thereof, with the accompanying drawings described below:
**FIG.1** schematically shows a flowchart diagram of a first embodiment.
**FIG.2** schematically shows a flowchart diagram of a second embodiment.

### DETAILED DESCRIPTION

The present invention may be understood according to the detailed description provided herein.

According to the invention, a first user wants to exchange data with a second user, the first user using a first NFC mobile device H1 and the second user using a second NFC mobile device H2. The first user for example wants to transfer some money from his banking account to the second user by performing an NFC money transfer with a mobile banking application.

The first user who wants to perform the money transfer first connects to a its banking server in order to initiate a money transfer transaction specifying an amount and an account to be debited. In response to this request the server sends back to the first user a transaction number or identifier ID corresponding to the transaction.

Once received, the first user exchanges this transaction identifier with the second user he wants to transfer the money using the NFC bearer.

For doing so, the firt user uses the first NFC mobile device H1 and the second user uses the second NFC mobile device H2 for exchanging the transaction identifier.

The first device H1 and the second device H2 comprise respectively a first secure element SE1 and a second secure element SE2 on which respectively a first and a second application APP1 and APP2 is installed and which requires a Peer-to-Peer communication.

In this first embodiment he first NFC mobile device H1 and the second NFC mobile device H2 are two NFC/SWP-enabled handsets comprise and the first secure element SE1 is an Universal Subscriber Identity Module (USIM). The first handset H1 then comprises a USIM 1 and the second handset H2 comprises a USIM 2.

The USIM 1 and USIM 2 comprise respectively a specific application to address Peer-to-Peer data exchanges.

On such devices, the Card Emulation mode is managed by the USIM whereas the Reader mode is managed by the handset.

As the first mobile device H1 and the second mobile device H2 do not support the Peer-to-Peer protocol, in order to exchange data according to a Peer-to-Peer mode, one handset has to be in Card Emulation mode and the other handset has to be in Reader mode.

Neither the fisrt handset H1 nor the second handset H2 can be forced to be in a Reader mode. Thus when the first user wants to transfer the transaction ID to the second handset H2 of the second user, it is not possible to determine in advance which mobile device is in a Reader mode, and which mobile device is in the Card Emulation mode.

An APDU command is sent from the first handset H1 to a dedicated USIM 1 application comprising a first message MSG 1. The first message MSG1 is copied in the USIM 1 application of the first handset 1. The message MSG1 comprises the transaction identifier ID that the first user wants to transfer to the second user. The dedicated application on both USIM 1 and USIM 2 is adapted to store such messages and to use NFC HCI transactions events to transfer locally a data between the first secure element USIM 1 and the frist application APP1 or between the second secure element USIM 2 and the second application APP2. This application is a specific Javacard applet which is needed to address these Peer-to-Peer exchanges. This applet has an APDU interface, manages HCI transaction event to relay a Peer-to_Peer message from a remote handset application to a local handset application, and stores Peer-to-Peer messages when no NFC session is on-going, e.g. waiting to be fetched by the remote handset during the next NFC session.

The first application APP 1 of the first handset H1 initiates a Peer-to-Peer session and requests the first user to present his handset H1 in front of the second handset H2.

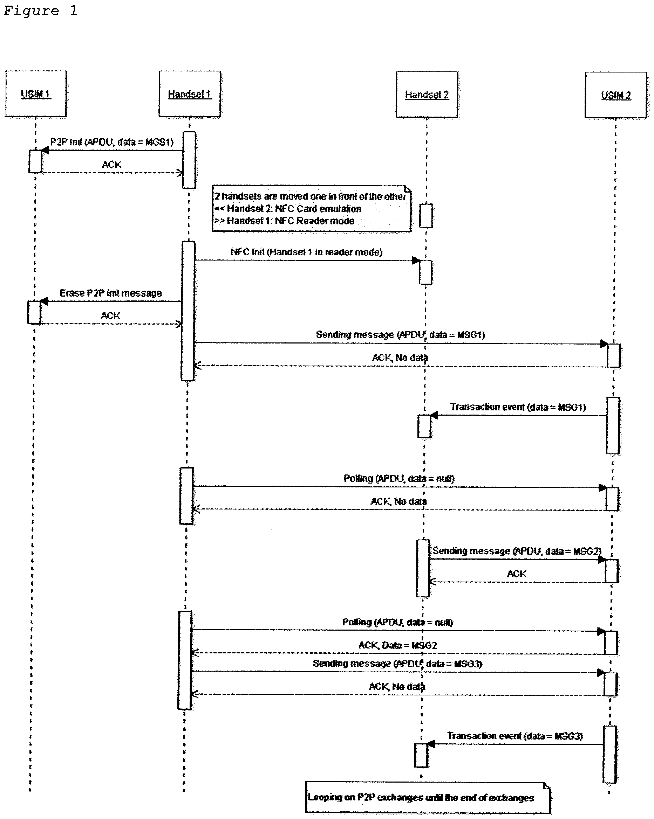

Shown in figure 1 is a sequence diagram of the first embodiment wherein the first handset H1 of the first user is in a Reader mode and the second handset H2 of the second user is in Card Emulation mode when the first application APP1 on the first handset initiates de Peer-to-Peer session.

The first application APP1 of the first handset H1 requests advantageously the first secure element, e.g. USIM 1 to erase the first message MSG1 received by the first handset H1. By doing so the first message will not be used a seond time during the exchanges. The application APP1 then sends the first message MSG 1 to the second secure element, e.g. USIM 2 of the second handset 2. An APDU command is sent to this purpose from the first handset H1 to the second handset H2 comprising the first message MSG 1, e.g. the transaction identifier.

As there is an ongoing NFC / SWP session it is then possible for both USIM to send locally HCI events to handset applications. The second secure element, e.g. the USIM 2 of the second handset H2 sends the received message MSG1 to the second handset H2 by sending an HCI transaction event. This event is sent locally by the USIM to the CLF which will relay it to the handset application registered to be wake up on this event; this event contains the application identifier of the Javacard applet which sends the event and also a data field. The second application APP2 of the second handset 2 is notified of the event as it is registered to be automatically started on such event. Then even if the second application APP2 is not running, its registration in the handset system to the HCI transaction event will allow the handset OS to start the second application APP2 when such event occurs. The second application APP2 will also receive the event if the application is already running.

The first application APP1 of the first handset sends regularly polling command to USIM2 to know if there is a new message from the second application APP2 of the second handset H2.

Once the second application APP2 have processed the message MSG1, it can then reply to this message by sending a second message MSG2 to the first application APP1 by writing locally the second message MSG2 in the second secure element, e.g. USIM 2.1.

At the next polling command from the first application APP1 of the first handset H1, the second message MSG2 is then read from the first application APP1.

The Peer-to-Peer communication carries on in the same way until both first and second devices H1 and H2 finalize the transaction. This is for example done by sending in both directions a message of end in order to end the exchange.

Once the transation identifier is transferred to the second NFC device H2, the second user can use it in order to finish the transaction and to be given the money corresponding to said transaction.

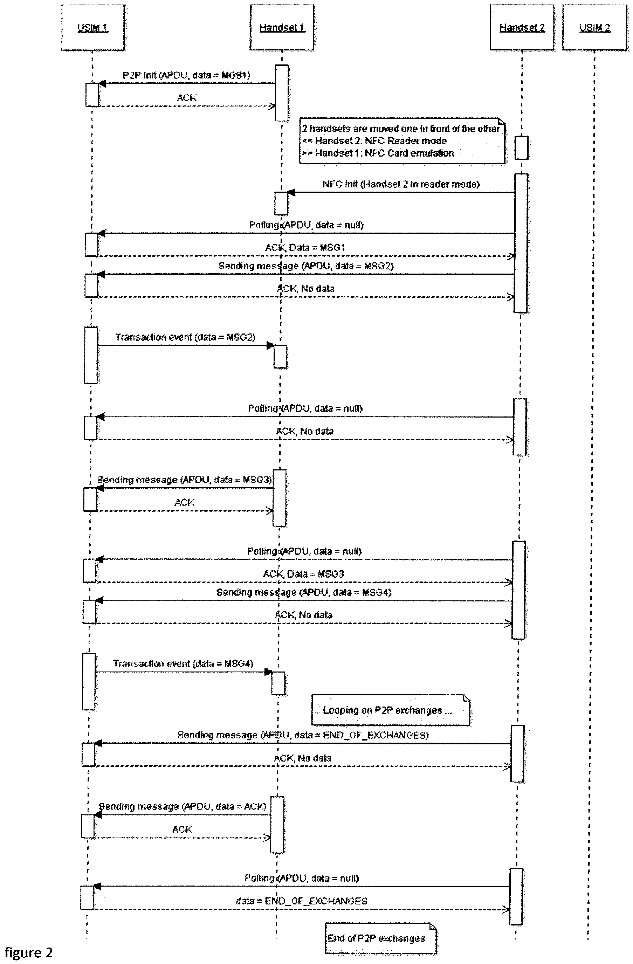

In a second embodiment as shown in figure 2, the first handset H1 of the first user is in a Card Emulation mode and the second handset H2 of the second user is in a Reader mode when the application APP1 initiates de Peer-to-Peer session.

In this case, the second application APP2 of the second handset is started or notified by a card detection event. As it has not initiated the Peer-to-Peer session it sends a polling command to USIM1.

The second application APP2 sends and APDU command over NFC to the first secure element, e.g. USIM1 to get the first message MSG1 copied in the first secure element, e.g. USIM 1,initially copied by the first application APP1.

The second application APP2 then sends a second message MSG2' to USIM1.

As there is an ongoing SWP session, the USIM1 sends the second message MSG2' to first application APP1 by sending an HCI transaction event.

The first application APP1 is notified of the event as it is registered to be automatically started on such event.

The second application APP2 sends regularly polling commands to USIM1 to know if there is a new message MSG3 from the first application APP1.

The first application APP1 copies in USIM1 a third message MSG3. At next polling command from the second application APP2, the third message MSG3 is read from the first application APP1.

The communication carries on in the same way until both first and second devices H1 and H2 finalize the transaction.

It will be well understood that the first handset H1 and the second handset H2 are not limited examples and any mobile device can be used. Two mobile device can exchange data locally without using connecting to an external server...

This method can be advantageously used in any transaction between two mobile devices comprising a secure element.

## Claims

1. Method for exchanging data between a first mobile device (H1) and a second mobile device (H2) in a Peer-to-Peer mode, said first and second device being near field communication devices supporting only a Reader mode and a Card Emulation mode for exchanging data , said first device comprising a first application (APP1), a first secure element (SE1), said second device comprising a second application (APP2), a second secure element (SE2),
**characterised in that** it comprises
- copying a first data (MSG1) to be exchanged in the first secure element (SE1),
- initiating a Peer-to-Peer session by the first application (APP1) of the first mobile device (H1); and
- if the first mobile device (H1) is in Reader mode,
o sending said first data (MSG1) from said first secure element (SE1) to the secure element (SE2) of the second mobile device (H2),
o sending said first data (MSG1) from the second secure element (SE2) to the second application (APP2) of the second mobile device (H2);
- otherwise, if the first mobile device (H1) is in a Card Emulation mode,
o sending a command by the second application (APP2) of the second mobile device (H2) to said first secure element (SE1) so as to get the first data (MSG1);
o receiving said first data (MSG1) to be exchanged by the second application (APP2) from said first application (APP 1).

2. Method according to claim 1, **characterized in that** when the first mobile device (H1) is in a Card Emultaion mode, after receiving first data (MSG1) to be exchanged by the second application (APP2) from said first application (APP 1), it comprises sending second data (MSG2') to the first secure element (SE1), said first secure element (SE1) then sending said second data (MSG2') to the first application (APP1);

3. Method for exchanging data according to claim 1, **characterised in that** it comprises if the first mobile device (H1) is a Reader mode, erasing first data (MSG1) to be exchanged from said first secure element (SE1) before sending said first data (MSG1) to the second secure element (SE2).

4. Method for exchanging data according to claim 1 and 3, **characterised in that** it comprises sending regular command from the first application (APP1) of the first mobile device (H1) to the second second secure element(SE2).

5. Method for exchanging data according to claim 1, 2 and 3, **characterised in that** it comprises sending regular command from the second application (APP2) of the second mobile device (H2) to the first secure element (SE1).

6. Method for exchanging data according to claim 4, **characterised in that** it comprises copying second data (MSG2) to be sent by the second application (APP2) of the second mobile device (H2) to the first application (APP 1) of the first mobile device (H1) as a response data in the second secure element (SE2).

7. Method for exchanging data according to claim 6, **characterised in that** it comprises reading second data (MSG2) by the first application (APP1) at a next command from the first application (APP1) of the first mobile device (H1).

8. Method for exchanging data according to claim 5, **characterised in that** it comprises copying a third data (MSG3) to be sent by the first application (APP1) of the first mobile device (H1) to the second application (APP2) of the second mobile device (H2) as a response data in the first secure element (SE1).

9. Method for exchanging data according to claim 5, **characterised in that** it comprises reading said third data (MSG3) by the first application (APP1) at a next command from the second application (APP2) of the second mobile device (H2).

10. Method according to one of the previous claims, **characterized in that** it comprised a step wherein the two mobile devices are placed one in front of the other so as to initiate a NFC communication.

11. Use of a first mobile handset (H1) and a second mobile handset as mobile device, and a first Universal Subscriber Identity Module (USIM 1) and a second Universal Subscriber Identity Module (USIM 2) as secure element for exchanging data according to the method of claim 1 to 10.
